# EUROPEAN PATENT APPLICATION

(11) **EP 4 378 994 A1**
(43) Date of publication of application: **05.06.2024**
(21) Application number: 22869875.9
(22) Date of filing: 07.09.2022
(51) Int. Cl.: C08L 11/00, C08K 5/36, C08K 5/405, C08L 71/03

(54) **RUBBER COMPOSITION, VULCANIZATE, AND VULCANIZED MOLDED OBJECT**

(30) Priority: 14.09.2021 JP 2021149441
(71) Applicant: Denka Company Limited, Tokyo 103-8338 (JP)
(72) Inventor: SAKAI, Yuki, Tokyo 103-8338 (JP)
(74) Representative: Gulde & Partner
(86) International application number: PCT/JP2022/033589
(87) International publication number: WO 2023/042728

(57) **Abstract**

Provided are a rubber composition capable of giving vulcanized molded objects having a satisfactory balance among oil resistance, freeze resistance, and flex fatigue resistance, and a vulcanizate and a vulcanized molded object which have a satisfactory balance among oil resistance, freeze resistance, and flex fatigue resistance.

According to the present invention, there is provided a rubber composition including a chloroprene-based rubber and an epichlorohydrin-based rubber, wherein the rubber composition contains 5 to 95 parts by mass of the chloroprene-based rubber and 5 to 95 parts by mass of the epichlorohydrin-based rubber, per 100 parts by mass of rubbers contained in the rubber composition, and the chloroprene-based rubber has a content of an unsaturated nitrile monomer unit of less than 25% by mass.

## Description

### Technical Field

The present invention relates to a rubber composition, a vulcanizate, and a vulcanized molded object, etc.

### Background Art

Chloroprene rubber has excellent properties and is used in a wide range of fields such as automobile parts, adhesives, and various industrial rubber parts by taking advantage of these properties. Rubber compositions described in Patent Literatures 1 to 3 below are known as techniques in which chloroprene rubber can be used.

### Citation List

### Patent Literature

Patent Literature 1: JP-A-2016-23191
Patent Literature 2: JP-A-2012-111899
Patent Literature 3: JP-A-H9-268239

### Summary of Invention

### Technical Problem

Rubber compositions containing chloroprene rubber may be required to simultaneously have various properties at a high level in a vulcanized molded object of the rubber composition, but it is difficult to obtain a vulcanized molded object having a satisfactory balance among oil resistance, freeze resistance, and flex fatigue resistance.

The present invention has been made in view of these circumstances, and an object thereof is to provide a rubber composition capable of giving a vulcanized molded object having a satisfactory balance among oil resistance, freeze resistance, and flex fatigue resistance, and a vulcanizate and a vulcanized molded object which have a satisfactory balance among oil resistance, freeze resistance, and flex fatigue resistance.

### Solution to Problem

According to the present invention, there is provided a rubber composition comprising a chloroprene-based rubber and an epichlorohydrin-based rubber, wherein the rubber composition comprises 5 to 95 parts by mass of the chloroprene-based rubber and 5 to 95 parts by mass of the epichlorohydrin-based rubber, per 100 parts by mass of rubbers contained in the rubber composition, and the chloroprene-based rubber has a content of an unsaturated nitrile monomer unit of less than 25% by mass.

According to another aspect of the present invention, a vulcanizate of the rubber composition described above is provided.

In addition, according to another aspect of the present invention, a vulcanized molded object using the vulcanizate described above is provided.

The present inventors have made intensive studies and found that by setting the amounts of chloroprene-based rubber and epichlorohydrin-based rubber contained in the rubber composition within a specific numerical range, and by including a specific type of rubber in the chloroprene-based rubber, a rubber composition capable of giving a vulcanized molded object having a satisfactory balance among oil resistance, freeze resistance, and flex fatigue resistance can be obtained, and the present invention is completed.

Various embodiments of the present invention are illustrated below. The embodiments shown below can be combined with each other.
[1] A rubber composition comprising a chloroprene-based rubber and an epichlorohydrin-based rubber, wherein:
   the rubber composition comprises 5 to 95 parts by mass of the chloroprene-based rubber and 5 to 95 parts by mass of the epichlorohydrin-based rubber, per 100 parts by mass of rubbers contained in the rubber composition, and
   the chloroprene-based rubber has a content of an unsaturated nitrile monomer unit of less than 25% by mass.
[2] The rubber composition of [1], wherein:
   the unsaturated nitrile monomer is acrylonitrile.
[3] The rubber composition of [1] or [2], wherein:
   the chloroprene-based rubber comprises a rubber A and a rubber B,
   the rubber A is a chloroprene-based rubber having 1 to 20% by mass of an unsaturated nitrile monomer unit, 60 to 99% by mass of a chloroprene monomer unit, and 0 to 20% by mass of monomer units other than the chloroprene monomer and the unsaturated nitrile monomer, and
   the rubber B is a chloroprene-based rubber having 80 to 100% by mass of a chloroprene monomer unit and 0 to 20% by mass of monomer units other than the chloroprene monomer and the unsaturated nitrile monomer.
[4] The rubber composition of any one of [1] to [3], wherein:
   the chloroprene-based rubber comprises 20 to 99% by mass of the rubber A and 1 to 80% by mass of the rubber B, when the chloroprene-based rubber is 100% by mass.
[5] The rubber composition of any one of [1] to [4], wherein:
   the epichlorohydrin-based rubber comprises 5 to 90 mol% of an ethylene oxide monomer unit.
[6] The rubber composition of any one of [1] to [5], wherein:
   the epichlorohydrin-based rubber comprises an epichlorohydrin-ethylene oxide-allyl glycidyl ether ternary copolymer or an epichlorohydrin-ethylene oxide binary copolymer.
[7] The rubber composition of any one of [1] to [6], wherein:
   the rubber composition comprises at least one compound selected from the group consisting of sulfur, trimethylthiourea, ethylenethiourea, diphenylthiourea, diethylthiourea, dibutylthiourea, 1,3-trimethylene-2-thiourea, and 3-methylthiazolidine-2-thione.
[8] The rubber composition of any one of [1] to [7], wherein:
   the rubber composition comprises at least one compound selected from the group consisting of 2-mercaptobenzimidazole, 2-mercaptomethylbenzimidazole, and zinc salt of 2-mercaptobenzimidazole.
[9] A vulcanizate of the rubber composition of any one of [1] to [8].
[10] A vulcanized molded object using the vulcanizate of [9].

### Effects of Invention

According to the rubber composition of the present invention, it is possible to obtain a vulcanized molded object having a satisfactory balance among oil resistance, freeze resistance, and flex fatigue resistance. Furthermore, the obtained vulcanized molded object has not only the excellent mechanical strength, weather resistance, chemical resistance, and heat resistance of chloroprene-based rubber, but also has oil resistance, freeze resistance, and flex fatigue resistance, and thus can be used as various members that require these characteristics. Examples include industrial parts such as accumulators, boots, hoses, belts, vibrationproof rubber, damping materials, electric wires, gaskets, oil seals, packings, diaphragms, sponges, etc. In particular, they can be used as members for accumulators, diaphragms and hoses.

### Description of Embodiments

Hereinafter, the present invention will be described in detail by exemplifying embodiments of the present invention. The present invention is not limited by these descriptions. Various features of embodiments of the present invention described below can be combined with each other. In addition, the invention is established independently for each feature.

### 1. Rubber composition

The rubber composition according to the present invention contains 5 to 95 parts by mass of chloroprene-based rubber and 5 to 95 parts by mass of epichlorohydrin-based rubber, per 100 parts by mass of rubbers contained in the rubber composition. In addition, the chloroprene-based rubber according to the present invention is a chloroprene-based rubber having a content of an unsaturated nitrile monomer unit of less than 25% by mass. According to the present invention, by setting the amounts of chloroprene-based rubber and epichlorohydrin-based rubber contained in the rubber composition within a specific numerical range, and specifying the type of chloroprene-based rubber, it is possible to obtain a vulcanized molded object having a satisfactory balance among oil resistance, freeze resistance, and flex fatigue resistance.

### 1.1 Chloroprene-based rubber

The chloroprene-based rubber according to the present invention refers to a rubber containing a chloroprene-based polymer having chloroprene (2-chloro-1,3-butadiene) as a monomer unit (chloroprene monomer unit. monomer unit = structural unit). Examples of the chloroprene-based polymer include homopolymers of chloroprene, copolymers of chloroprene (copolymers of chloroprene and monomers copolymerizable with chloroprene), and the like. The polymer structure of the chloroprene-based polymer is not particularly limited.

Note that commercially available 2-chloro-1,3-butadiene may contain a small amount of 1-chloro-1,3-butadiene as an impurity. Such 2-chloro-1,3-butadiene containing a small amount of 1-chloro-1,3-butadiene can also be used as the chloroprene monomer of this embodiment.

The chloroprene-based rubber according to one embodiment of the present invention is a chloroprene-based rubber in which the content of the unsaturated nitrile monomer unit is less than 25% by mass. By setting the content of the unsaturated nitrile monomer unit to less than 25% by mass, the resulting rubber composition will have sufficient freeze resistance. In addition, especially by setting the content of the unsaturated nitrile monomer unit to 1% by mass or more, the resulting rubber composition will have sufficient oil resistance, and can obtain a vulcanized molded object having an excellent balance among oil resistance, freeze resistance, and flex fatigue resistance.

In addition, the chloroprene-based rubber according to one embodiment of the present invention preferably includes a rubber A, which is a chloroprene-based rubber having a content of an unsaturated nitrile monomer unit of less than 25% by mass.

The rubber A can be a chloroprene-based rubber having a content of an unsaturated nitrile monomer unit of less than 25% by mass when the rubber A is 100% by mass, and the content of the unsaturated nitrile monomer unit is preferably 1% by mass or more and less than 25% by mass, and the content of the unsaturated nitrile monomer unit is more preferably 1 to 20% by mass.

The content of the unsaturated nitrile monomer unit in rubber A is, for example, 0, 1, 2, 3, 4, 5, 6, 7, 8, 9, 10, 11, 12, 13, 14, 15, 16, 17, 18, 19, 20, 21, 22, 23, 24% by mass, or less than 25% by mass, and may be within the range between any two of the numerical values exemplified here.

Examples of the unsaturated nitrile include acrylonitrile, methacrylonitrile, ethacrylonitrile, phenyl acrylonitrile, and the like. The unsaturated nitrile can be used alone or in combination of two or more types. The unsaturated nitrile preferably includes acrylonitrile from the viewpoint of easily obtaining excellent moldability and from the viewpoint of easily obtaining excellent breaking strength, breaking elongation, hardness, tear strength, and oil resistance in a vulcanized molded object.

The content of the unsaturated nitrile monomer unit contained in the chloroprene-based rubber can be calculated from the content of nitrogen atoms in the chloroprene-based rubber. Specifically, the content of nitrogen atoms in 100 mg of chloroprene-based rubber can be measured using an elemental analyzer (Sumigraph 220F, manufactured by Sumika Chemical Analysis Service, Ltd.) to calculate the content of the monomer unit derived from the unsaturated nitrile monomer. Elemental analysis measurements can be performed under the following conditions. For example, the electric furnace temperature is set to 900°C for the reaction furnace and 600°C for the reduction furnace, the column temperature is set to 70°C, and the detector temperature is set to 100°C, oxygen is flowed at 0.2 mL/min as a combustion gas and helium is flowed at 80 mL/min as a carrier gas. A calibration curve can be created using aspartic acid (10.52%), which has a known nitrogen content, as a reference material.

The rubber A according to one embodiment of the present invention preferably contains 60 to 99% by mass of chloroprene monomer unit, when the rubber A is 100% by mass. The content of the chloroprene monomer unit in rubber A is, for example, 60, 65, 70, 75, 80, 85, 90, 95, 99% by mass, and may be within the range between any two of the numerical values exemplified here. By setting the content of the chloroprene monomer unit within the above numerical range, a rubber composition capable of giving molded objects having an excellent balance among mechanical strength, oil resistance, freeze resistance, and flex fatigue resistance can be obtained.

The rubber A according to one embodiment of the present invention may also have monomer units other than chloroprene monomer and unsaturated nitrile monomer. The monomer units other than chloroprene monomer and unsaturated nitrile monomer are not particularly limited as long as they can be copolymerized with chloroprene monomer or with chloroprene monomer and unsaturated nitrile monomer, examples thereof include esters of (meth)acrylic acid (methyl (meth)acrylate, butyl (meth)acrylate, 2-ethylhexyl (meth)acrylate, etc.), hydroxyalkyl (meth)acrylate (2-hydroxymethyl (meth)acrylate, 2-hydroxyethyl (meth)acrylate, 2-hydroxypropyl (meth)acrylate, etc.), 2,3-dichloro-1,3-butadiene, 1-chloro-1,3-butadiene, butadiene, isoprene, ethylene, styrene, sulfur, and the like.

The rubber A according to one embodiment of the present invention may contain 0 to 20% by mass of monomer units other than chloroprene monomer and unsaturated nitrile monomer, when the rubber A is 100% by mass. The content of monomer units other than chloroprene monomer and unsaturated nitrile monomer in rubber A is, for example, 0, 2, 4, 6, 8, 10, 12, 14, 16, 18, 20% by mass, and may be within the range between any two of the numerical values exemplified here. By adjusting the copolymerization amounts of monomers other than chloroprene monomer and unsaturated nitrile monomer within this range, the effect of copolymerizing these monomers can be exhibited without impairing the properties of the resulting rubber composition.

The rubber A according to one embodiment of the present invention may contain 1 to 20% by mass of unsaturated nitrile monomer unit, 60 to 99% by mass of chloroprene monomer unit, and 0 to 20% by mass of other copolymerizable monomer units other than chloroprene monomer and unsaturated nitrile monomer.

In addition, the rubber A according to one embodiment of the present invention may also consist of only chloroprene monomer unit and unsaturated nitrile monomer unit.

The chloroprene-based rubber according to one embodiment of the present invention can also contain chloroprene-based rubbers other than rubber A described above. That is, the chloroprene-based rubber according to one embodiment of the present invention may contain only rubber A, or may contain rubber A and further contain one or more types of rubbers different from rubber A.

The chloroprene-based rubber according to one embodiment of the present invention may include a rubber B, which is a chloroprene-based rubber different from rubber A. The rubber B may be a chloroprene-based rubber having a higher content of chloroprene monomer unit than rubber A.

The rubber B preferably contains 80 to 100% by mass of chloroprene monomer unit, when the rubber B is 100% by mass. The content of the chloroprene monomer unit in rubber B is, for example, 80, 85, 90, 95, 100% by mass, and may be within the range between any two of the numerical values exemplified here. By setting the content of the chloroprene monomer unit within the above numerical range, it is possible to obtain a rubber composition that has better mechanical strength and that is capable of giving a molded object having an excellent balance among oil resistance, freeze resistance, and flex fatigue resistance.

The rubber B according to one embodiment of the present invention may contain 0 to 20% by mass of monomer units other than chloroprene monomer and unsaturated nitrile monomer, when the rubber B is 100% by mass. The content of monomer units other than chloroprene monomer and unsaturated nitrile monomer in rubber B is, for example, 0, 2, 4, 6, 8, 10, 12, 14, 16, 18, 20% by mass, and may be within the range between any two of the numerical values exemplified here. By adjusting the copolymerization amounts of monomers other than chloroprene monomer and unsaturated nitrile monomer within this range, the effect of copolymerizing these monomers can be exhibited without impairing the properties of the resulting rubber composition.

The content of the unsaturated nitrile monomer unit in the rubber B according to one embodiment of the present invention can be lower than the content of the unsaturated nitrile monomer unit in rubber A. The content of the unsaturated nitrile monomer unit in the rubber B according to one embodiment of the present invention may be less than 1% by mass. In addition, the rubber B according to one embodiment of the present invention may not contain the unsaturated nitrile monomer unit. The rubber B according to one embodiment of the present invention may have 80 to 100% by mass of chloroprene monomer unit and 0 to 20% by mass of monomer units other than chloroprene monomer and unsaturated nitrile monomer. The rubber B according to one embodiment of the present invention may also consist only of chloroprene monomer unit and monomer units other than chloroprene monomer and unsaturated nitrile monomer. In addition, the rubber B according to one embodiment of the present invention may also consist of only chloroprene monomer unit. The rubber B according to one embodiment of the present invention may also be a mercaptan-modified chloroprene rubber.

The rubber composition according to one embodiment of the present invention preferably contains 20 to 99% by mass of rubber A, when the chloroprene-based rubber contained in the rubber composition is 100% by mass. When the chloroprene-based rubber is 100% by mass, the content of rubber A in the chloroprene-based rubber can be, for example, 20, 25, 30, 35, 40, 45, 50, 55, 60, 65, 70, 75, 80, 85, 90, 95, 99% by mass, and may be within the range between any two of the numerical values exemplified here.

The chloroprene-based rubber according to one embodiment of the present invention preferably contains 1 to 80% by mass of rubber B, when the chloroprene-based rubber is 100% by mass. When the chloroprene-based rubber is 100% by mass, the content of rubber B in the chloroprene-based rubber can be, for example, 1, 5, 10, 15, 20, 25, 30, 35, 40, 45, 50, 55, 60, 65, 70, 75, 80% by mass, and may be within the range between any two of the numerical values exemplified here. The chloroprene-based rubber according to one embodiment of the present invention can contain 20 to 99% by mass of rubber A and 1 to 80% by mass of rubber B, when the chloroprene-based rubber is 100% by mass. By including rubber B in addition to rubber A, the flex fatigue resistance can be further improved.

In the chloroprene-based rubber according to one embodiment of the present invention, the content of the unsaturated nitrile monomer unit is preferably less than 25% by mass, and the content of the unsaturated nitrile monomer unit is preferably 1 part by mass or more and less than 25% by mass, when the chloroprene-based rubber contained in the rubber composition (for example, including rubber A and rubber B) is 100% by mass. The content of the unsaturated nitrile monomer unit in the chloroprene-based rubber is, for example, 0, 1, 2, 3, 4, 5, 6, 7, 8, 9, 10, 11, 12, 13, 14, 15, 16, 17, 18, 19, 20, 21, 22, 23, 24% by mass, and is less than 25% by mass, and may be within the range between any two of the numerical values exemplified here.

The chloroprene-based polymer (a homopolymer of chloroprene, a copolymer of chloroprene, etc.) contained in the chloroprene-based rubber according to the present invention may be a sulfur-modified chloroprene polymer, a mercaptan-modified chloroprene polymer, a xanthogen-modified chloroprene polymer, a dithiocarbonate-based chloroprene polymer, a trithiocarbonate-based chloroprene polymer, a carbamate-based chloroprene polymer, or the like.

The weight average molecular weight (Mw), number average molecular weight (Mn), and molecular weight distribution (molecular weight polydispersity, Mw/Mn) of the chloroprene-based rubber may be within the following ranges, from the viewpoint of easily obtaining excellent balance among tensile strength, water resistance, oil resistance, and abrasion resistance.

The weight average molecular weight of the chloroprene-based rubber may be 10×10³ g/mol or more, 50×10³ g/mol or more, 100×10³ g/mol or more, 300×10³ g/mol or more, 400×10³ g/mol or more, or 450×10³ g/mol or more. The weight average molecular weight of the chloroprene-based rubber may be 5000×10³ g/mol or less, 3000×10³ g/mol or less, 2000×10³ g/mol or less, 1000×10³ g/mol or less, 800×10³ g/mol or less, or 500×10³ g/mol or less. From these viewpoints, the weight average molecular weight of the chloroprene-based rubber may be 10×10³ to 5000×10³ g/mol, 100×10³ to 2000×10³ g/mol, or 300×10³ to 1000×10³ g/mol.

The number average molecular weight of the chloroprene-based rubber may be 1×10³ g/mol or more, 5×10³ g/mol or more, 10×10³ g/mol or more, 50×10³ g/mol or more, 100×10³ g/mol or more, or 130×10³ g/mol or more. The number average molecular weight of the chloroprene-based rubber may be 1000×10³ g/mol or less, 800×10³ g/mol or less, 500×10³ g/mol or less, 300×10³ g/mol or less, 200×10³ g/mol or less, or 150×10³ g/mol or less. From these viewpoints, the number average molecular weight of the chloroprene-based rubber may be 1×10³ to 1000×10³ g/mol, 10×10³ to 500×10³ g/mol, or 50×10³ to 300×10³ g/mol.

The molecular weight distribution of the chloroprene-based rubber may be 1.0 or more, 1.5 or more, 2.0 or more, 2.5 or more, 3.0 or more, 3.2 or more, or 3.4 or more. The molecular weight distribution of the chloroprene-based rubber may be 10 or less, 8.0 or less, 5.0 or less, 4.0 or less, 3.8 or less, 3.5 or less, or 3.4 or less. From these viewpoints, the molecular weight distribution of the chloroprene-based rubber may be 1.0 to 10, 2.0 to 5.0, or 2.5 to 4.0.

The weight average molecular weight (Mw) and number average molecular weight (Mn) of the chloroprene-based rubber can be obtained by measuring with gel permeation chromatography (GPC) and converting in terms of polystyrene, and specifically, can be measured by the methods described in Examples.

### 1.2 Method for producing chloroprene-based rubber

The method for producing the chloroprene-based rubber according to the present invention is not particularly limited, and can be obtained by a production method including an emulsion polymerization step of emulsion polymerizing raw material monomers containing chloroprene monomer.

In the emulsion polymerization step according to one embodiment of the present invention, a latex containing the chloroprene-based polymer including chloroprene monomer unit can be obtained by emulsion polymerizing monomers including chloroprene monomer and unsaturated nitrile monomer using an emulsifier, a dispersant, a catalyst, a chain transfer agent and the like appropriately, and adding a polymerization terminator when the desired final conversion rate is reached.

Next, unreacted monomers can be removed from the polymerization solution obtained by the emulsion polymerization step. The method is not particularly limited, and includes, for example, a steam stripping method.

Thereafter, pH is adjusted, and a chloroprene-based rubber containing the chloroprene-based polymer can be obtained by going through conventional processes such as freezing and coagulation, washing with water, and drying with hot air.

The polymerization initiator used for emulsion polymerization is not particularly limited, and known polymerization initiators commonly used for emulsion polymerization of chloroprene can be used. Examples of the polymerization initiator include organic peroxides such as potassium persulfate, ammonium persulfate, sodium persulfate, hydrogen peroxide, and t-butyl hydroperoxide.

The emulsifier used in emulsion polymerization is not particularly limited, and known emulsifiers commonly used in emulsion polymerization of chloroprene can be used. Examples of the emulsifier include alkali metal salts of saturated or unsaturated fatty acids having 6 to 22 carbon atoms, alkali metal salts of rosin acids or disproportionated rosin acids (e.g. potassium rosinate), alkali metal salts of formalin condensate of β-naphthalenesulfonic acid (e.g. sodium salts).

The molecular weight regulator used in emulsion polymerization is not particularly limited, and known molecular weight regulators commonly used in emulsion polymerization of chloroprene can be used, such as mercaptan-based compounds, xanthogen-based compounds, dithiocarbonate-based compounds, trithiocarbonate-based compounds, and carbamate-based compounds. As the molecular weight regulator for the chloroprene-based rubber according to one embodiment of the present invention, xanthogen-based compounds, dithiocarbonate-based compounds, trithiocarbonate-based compounds, and carbamate-based compounds can be suitably used.

The polymerization temperature and the final conversion rate of monomers are not particularly limited, and the polymerization temperature may be, for example, 0 to 50°C or 10 to 50°C. The polymerization may be carried out such that the final conversion rate of monomers is in the range of 40 to 95% by mass. In order to adjust the final conversion rate, when the desired conversion rate is reached, a polymerization terminator that stops the polymerization reaction may be added to terminate the polymerization.

The polymerization terminator is not particularly limited, and know polymerization terminators commonly used in emulsion polymerization of chloroprene can be used. Examples of the polymerization terminator include phenothiazine (thiodiphenylamine), 4-t-butylcatechol, 2,2-methylenebis-4-methyl-6-t-butylphenol, and the like.

The chloroprene-based rubber according to one embodiment of the present invention can be obtained by, for example, removing unreacted monomers using a steam stripping method, adjusting the pH of the latex, and going through conventional processes such as freezing and coagulation, washing with water, and drying with hot air.

Chloroprene-based rubber is classified into mercaptan-modified type, xanthogen-modified type, sulfur-modified type, dithiocarbonate-based type, trithiocarbonate-based type, and carbamate-based type depending on the type of molecular weight regulator.

### 1.3 Epichlorohydrin-Based Rubber

The rubber composition according to the present invention contains 5 to 95 parts by mass of epichlorohydrin-based rubber. The epichlorohydrin-based rubber according to the present invention refers to a rubber containing a polymer having epichlorohydrin as a monomer unit. The epichlorohydrin-based rubber may contain a homopolymer of epichlorohydrin, or may contain a copolymer of epichlorohydrin monomer and one or more other monomers.

Examples of the copolymer include epichlorohydrin-ethylene oxide copolymer, epichlorohydrin-propylene oxide copolymer, epichlorohydrin-ethylene oxide-allyl glycidyl ether ternary copolymer, epichlorohydrin-ethylene oxide-propylene oxide-allyl glycidyl ether quaternary copolymer. The epichlorohydrin-based rubber according to one embodiment of the present invention preferably contains an epichlorohydrin-ethylene oxide-allyl glycidyl ether ternary copolymer or an epichlorohydrin-ethylene oxide binary copolymer. As the epichlorohydrin-based rubber, rubbers having different types and/or contents of monomer units can be used alone or in combination of two or more types.

The epichlorohydrin-based rubber according to one embodiment of the present invention preferably contains an ethylene oxide monomer unit. The epichlorohydrin-based rubber according to one embodiment of the present invention preferably contains 5 to 90 mol% of ethylene oxide unit, when the epichlorohydrin-based rubber contained in the rubber composition is 100 parts by mass. The content of the ethylene oxide monomer unit in the epichlorohydrin-based rubber is, for example, 5, 10, 15, 20, 25, 30, 35, 40, 45, 50, 55, 60, 65, 70, 75, 80, 85, 90 mol%, and may be within the range between any two of the numerical values exemplified here.

By adjusting the type and amount of the monomer unit contained in the epichlorohydrin-based rubber as described above, a rubber composition capable of giving vulcanized molded objects with more excellent freeze resistance and flex fatigue resistance can be obtained.

In the rubber composition according to the present invention, when rubber contained in the rubber composition is 100 parts by mass, the content of the chloroprene-based rubber is, for example, 5, 10, 15, 20, 25, 30, 35, 40, 45, 50, 55, 60, 65, 70, 75, 80, 85, 90, 95 parts by mass, and may be within the range between any two of the numerical values exemplified here.

In addition, in the rubber composition according to the present invention, when rubber contained in the rubber composition is 100 parts by mass, the epichlorohydrin-based rubber is, for example, 5, 10, 15, 20, 25, 30, 35, 40, 45, 50, 55, 60, 65, 70, 75, 80, 85, 90, 95 parts by mass, and may be within the range between any two of the numerical values exemplified here.

By containing a specific type of chloroprene-based rubber and epichlorohydrin-based rubber at a specific amount, the rubber composition according to the present invention becomes a rubber composition capable of giving vulcanized molded objects having a satisfactory balance among oil resistance, freeze resistance, and flex fatigue resistance.

### 1.4 Vulcanizing agent

The rubber composition according to the present invention can contain a vulcanizing agent.

The type of vulcanizing agent is not particularly limited as long as it does not impair the effects of the present invention. The vulcanizing agent is preferably a vulcanizing agent that can be used for vulcanization of chloroprene-based rubber and/or epichlorohydrin-based rubber, and is more preferably a vulcanizing agent that can be used for vulcanization of chloroprene-based rubber and epichlorohydrin-based rubber. One or more vulcanizing agents can be freely selected and used. Examples of the vulcanizing agent include sulfur and metal oxides. The vulcanizing agent according to one embodiment of the present invention may also consist of only metal oxides.

Examples of the metal oxide include zinc oxide, magnesium oxide, lead oxide, trilead tetroxide, iron trioxide, titanium dioxide, calcium oxide, hydrotalcite and the like. Preferably, the metal oxide contains at least one of zinc oxide and magnesium oxide.

From the viewpoint of ensuring processing safety and being able to obtain a good vulcanizate, the rubber composition according to the present invention preferably contains 3 to 15 parts by mass of vulcanizing agent, per 100 parts by mass of rubbers contained in the rubber composition. When rubber contained in the rubber composition is 100 parts by mass, the content of the vulcanizing agent is, for example, 3, 4, 5, 6, 7, 8, 9, 10, 11, 12, 13, 14, 15 parts by mass, and may be within the range between any two of the numerical values exemplified here.

### 1.5 Vulcanization accelerator

The rubber composition according to the present invention may contain a vulcanization accelerator, and may contain 0.3 to 5.0 parts by mass of vulcanization accelerator per 100 parts by mass of rubbers contained in the rubber composition. The content of the vulcanization accelerator is, for example, 0.3, 0.5, 1.0, 1.5, 2.0, 2.5, 3.0, 3.5, 4.0, 4.5, 5.0 parts by mass, and may be within the range between any two of the numerical values exemplified here.

The type of vulcanization accelerator is not particularly limited as long as it does not impair the effects of the present invention. The vulcanization accelerator is preferably a vulcanization accelerator that can be used for vulcanization of chloroprene-based rubber and/or epichlorohydrin-based rubber, and is more preferably a vulcanization accelerator that can be used for vulcanization of chloroprene-based rubber and epichlorohydrin-based rubber. One or more vulcanization accelerator can be freely selected and used.

Examples of the vulcanization accelerator include thiuram-based, dithiocarbamate-based, thiourea-based, guanidine-based, xanthate-based, thiazole-based, imidazole-based vulcanization accelerators, and the like.

Examples of the thiuram-based vulcanization accelerator include tetramethylthiuram disulfide (TMTD), tetraethylthiuram disulfide, tetrabutylthiuram disulfide, tetrakis(2-ethylhexyl) thiuram disulfide, tetramethylthiuram monosulfide, dipentamethylenethiuram tetrasulfide, and the like.

Examples of the dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate, and the like.

Examples of the thiourea-based vulcanization accelerator include thiourea compounds such as ethylenethiourea, diethylthiourea (N,N'-diethylthiourea), trimethylthiourea, diphenylthiourea (N,N'-diphenylthiourea), 1,3-trimethylene-2-thiourea.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, and the like.

Examples of the xanthate-based vulcanization accelerator include zinc butylxanthate, zinc isopropylxanthate, and the like.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio) benzothiazole, N-cyclohexylbenzothiazole-2-sulfenamide, and the like.

Examples of the imidazole-based vulcanization accelerator include 2-mercaptobenzimidazole, 2-mercaptomethylbenzimidazole, and zinc salt of 2-mercaptobenzimidazole.

These can be used alone or in combination of two or more types.

The rubber composition according to one embodiment of the present invention preferably contains at least one compound selected from the group consisting of sulfur, trimethylthiourea, ethylenethiourea, diphenylthiourea, diethylthiourea, dibutylthiourea, 1,3-trimethylene-2-thiourea, and 3-methylthiazolidine-2-thione.

In addition, the rubber composition according to one embodiment of the present invention preferably contains at least one compound selected from the group consisting of 2-mercaptobenzimidazole, 2-mercaptomethylbenzimidazole, and a zinc salt of 2-mercaptobenzimidazole. The rubber composition according to one embodiment of the present invention preferably contains at least one compound selected from the group consisting of sulfur, trimethylthiourea, ethylenethiourea, diphenylthiourea, diethylthiourea, dibutylthiourea, 1,3-trimethylene-2-thiourea, and 3-methylthiazolidine-2-thione, and at least one compound selected from the group consisting of 2-mercaptobenzimidazole, 2-mercaptomethylbenzimidazole and a zinc salt of 2-mercaptobenzimidazole.

### 1.6 Softening agent

The rubber composition according to the present invention may contain a softening agent.

The softening agent is not particularly limited as long as it is compatible with rubber. Examples of the softening agent include vegetable oils such as rapeseed oil, linseed oil, castor oil, and coconut oil, phthalate plasticizers, ester plasticizers such as DUP (diundecyl phthalate), DOP (dioctyl phthalate), DINP (diisononyl phthalate), DOTP (dioctyl terephthalate), DOS (dioctyl sebacate), DBS (dibutyl sebacate), DOA (dioctyl adipate), DINCH (diisononyl 1,2-cyclohexanedicarboxylate), TOP (trioctyl phosphate), TBP (tributyl phosphate), ether ester plasticizers, thioether plasticizers, petroleum plasticizers such as aromatic oils, naphthenic oils, lubricating oils, process oils, paraffin, liquid paraffin, vaseline, petroleum asphalt, etc. These can be used alone or in combination of two or more types.

The rubber composition according to the present invention preferably contains 5 to 50 parts by mass of softening agent, when rubber contained in the rubber composition is 100 parts by mass. The softening agent is, for example, 5, 10, 15, 20, 25, 30, 35, 40, 45, 50 parts by mass, and may be within the range between any two of the numerical values exemplified here.

### 1.7 Filler and reinforcing material

The rubber composition according to the present invention contains a filler and reinforcing material.

The filler and reinforcing material are added for the purpose of adjusting the hardness of rubber and improving mechanical strength. In this specification, specific examples of the filler and reinforcing material include furnace carbon blacks such as SAF, ISAF, HAF, EPC, XCF, FEF, GPF, HMF, and SRF, modified carbon blacks such as hydrophilic carbon black, thermal carbon such as channel black, lamp black, FT, and MT, acetylene black, Ketjen Black, silica, clay, talc, and calcium carbonate. These can be used alone or in combination of two or more types.

The rubber composition according to the present invention can contain 10 to 100 parts by mass of filler, when rubber contained in the rubber composition is 100 parts by mass. The content of the filler is, for example, 10, 20, 30, 40, 50, 60, 70, 80, 90, 100 parts by mass, and may be within the range between any two of the numerical values exemplified here.

### 1.8 Lubricant and processing aid

The rubber composition according to the present invention may further contain a lubricant and processing aid. The lubricant and processing aid are mainly added to improve processing characteristics, such as making it easier for the rubber composition to peel off from rolls, molds, extruder screws, etc.

Examples of the lubricant and processing aid include fatty acids such as stearic acid, paraffin processing aids such as polyethylene, fatty acid amides, vaseline, factice, and the like. These can be used alone or in combination of two or more types.

The rubber composition according to the present invention can contain 1 to 15 parts by mass of lubricant and processing aid, and can also contain 1 to 10 parts by mass, when rubber contained in the rubber composition is 100 parts by mass.

The content of the lubricant and processing aid is, for example, 1, 2, 3, 4, 5, 6, 7, 8, 9, 10, 11, 12, 13, 14, 15 parts by mass, and may be within the range between any two of the numerical values exemplified here.

### 1.9 Others

In addition to the above-mentioned components, the rubber composition according to the present invention can further contain components such as an anti-aging agent, an antioxidant, and a flame retardant within a range that does not impede the effects of the present invention.

Examples of the anti-aging agent and antioxidant include anti-ozone aging agents, phenol-based anti-aging agents, amine-based anti-aging agents, acrylate-based anti-aging agents, metal carbamates, waxes, phosphorus anti-aging agents, sulfur anti-aging agent, etc.

The rubber composition according to the present invention can contain 0.1 to 10 parts by mass of anti-aging agent and antioxidant, when rubber contained in the rubber composition is 100 parts by mass.

### 2. Method for producing rubber composition

The rubber composition according to one embodiment of the present invention is obtained by kneading a chloroprene-based rubber, an epoxy compound, and other necessary components at a temperature not higher than the vulcanization temperature. Examples of the device for kneading the raw material components include kneading devices such as a conventionally known mixer, a Banbury mixer, a kneader mixer, and an open roll.

### 3. Characteristics of rubber composition

As for the rubber composition according to one embodiment of the present invention, a vulcanizate, obtained by vulcanizing the rubber composition in accordance with JIS K6250, preferably has a T10 of -30°C or lower, as determined by Gehman torsion test in accordance with JIS K 6261. T10 is, for example, -30, -31, -32, -33, -34, -35, -36, -37, -38, -39, -40°C, and may be within the range between any two of the numerical values exemplified here.

As for the rubber composition according to one embodiment of the present invention, a vulcanizate, obtained by vulcanizing the rubber composition in accordance with JIS K6250, preferably has a volume change rate ΔV before and after being immersed in IRM903 oil at 130°C for 72 hours in accordance with JIS K 6258 of less than 40%.

The volume change rate ΔV is, for example, 0, 5, 10, 15, 20, 25, 30, 35, 39%, less than 40%, and may be within the range between any two of the numerical values exemplified here.

As for the rubber composition according to one embodiment of the present invention, when a vulcanizate obtained by vulcanizing the rubber composition in accordance with JIS K6250 is subjected to a De Mattia flex fatigue test in accordance with JIS K6260, the number of bending tests at the time a crack occurs is preferably 300,000 times or more.

The number of bending tests at the time a crack occurs can be, for example, 300,000, 400,000, 500,000, 600,000, 700,000, 800,000, 900,000, 1,000,000, 1,100,000, 1,200,000, 1,300,000, 1,400,000, 1,500,000, and may be within the range between any two of the numerical values exemplified here.

### 4. Unvulcanized molded object, vulcanizate, and vulcanized molded object

The unvulcanized molded object according to this embodiment uses the rubber composition according to this embodiment, and is a molded object (molded product) of the rubber composition according to this embodiment (unvulcanized state). The method for producing the unvulcanized molded object according to this embodiment includes a step of molding the rubber composition according to this embodiment (unvulcanized state). The unvulcanized molded object according to this embodiment is made of the rubber composition according to this embodiment (unvulcanized state).

The vulcanizate according to this embodiment is a vulcanizate of the rubber composition according to this embodiment. The method for producing the vulcanizate according to this embodiment includes a step of vulcanizing the rubber composition according to this embodiment.

The vulcanized molded object according to this embodiment is a vulcanized molded object of the rubber composition according to this embodiment. The vulcanized molded object according to this embodiment uses the vulcanizate according to this embodiment, and is a molded object (molded product) of the vulcanizate according to this embodiment. The vulcanized molded object according to this embodiment is made of the vulcanizate according to this embodiment.

The vulcanized molded object according to this embodiment can be obtained by molding a vulcanizate obtained by vulcanizing the rubber composition according to this embodiment (unvulcanized state), and can also be obtained by vulcanizing a molded object obtained by molding the rubber composition according to this embodiment (unvulcanized state). The vulcanized molded object according to this embodiment can be obtained by vulcanizing the rubber composition according to this embodiment after or during molding. The method for producing the vulcanized molded object according to this embodiment includes a step of molding the vulcanizate according to this embodiment, or a step of vulcanizing the unvulcanized molded object according to this embodiment.

The unvulcanized molded object, vulcanizate, and vulcanized molded object according to this embodiment can be used as rubber parts in various industrial fields such as buildings, structures, ships, railways, coal mines, and automobiles. In particular, the vulcanizate and vulcanized molded object have excellent oil resistance, freeze resistance, and flex fatigue resistance, and thus can be used as various members that require these characteristics. Examples include industrial parts such as accumulators, boots, hoses, belts, vibrationproof rubber, damping materials, electric wires, gaskets, oil seals, packings, diaphragms, sponges, and especially can be suitably used as a member for accumulators, diaphragms, and hoses.

### (Accumulator)

An accumulator is a pressure accumulation container that utilizes the compressibility of nitrogen gas and is used for capacity compensation and pulsation absorption in fluid circuits. As the mechanism of an accumulator, compressibility of nitrogen gas can be utilized to store the pressure of a fluid such as oil or water, and to instantly supply a large amount of pressure fluid or absorb pulsation or shock pressure. Accumulators come in bladder, diaphragm, and piston shapes, depending on the isolation structure between gas and fluid. Rubber materials such as NBR and CR are used for bladders and diaphragms depending on the type of fluid used.

The rubber composition according to the present invention provides a vulcanized rubber having excellent oil resistance, freeze resistance, and flex fatigue resistance, and can manufacture accumulators with better durability than conventional rubber compositions.

### (Boot)

A boot is a bellows-shaped member whose outer diameter gradually increases from one end to the other, and specifically, examples thereof include boots for constant velocity joint covers, boots for ball joint covers (dust cover boots), boots for rack and pinion gears, etc. for protecting drive parts such as automobile drive systems. The rubber composition of the present invention can improve the oil resistance and flex fatigue resistance of boots. As a result, it is possible to manufacture boots that are more reliable against non-polar liquids such as oil and grease contained therein than conventional rubber compositions.

### (Hose)

A hose is a bendable pipe, and specifically includes high/low pressure hoses for water supply, oil supply, air supply, steam, and hydraulic. The rubber composition of the present invention can improve the oil resistance and flex fatigue resistance of hoses. As a result, it is possible to manufacture hoses that come into direct contact with non-polar fluids, which has been difficult with conventional rubber compositions.

### (Belt)

Belts include power transmission belts, conveyor belts, and the like, and specifically include flat belts, conveyor belts, timing belts, V belts, rib belts, round belts, and the like. The rubber composition of the present invention can improve the oil resistance and flex fatigue resistance of power transmission belts and conveyor belts. As a result, it is possible to manufacture belts that can be used in environments where they are exposed to splashed oil, which has been difficult with conventional rubber compositions.

### (Vibrationproof rubber and damping material)

Vibrationproof rubber and damping materials are rubbers that prevent the transmission and spread of vibration, and specifically, include torsional dampers, engine mounts, muffler hangers, etc. that are used to absorb vibration and prevent noise when the engine is running for automobiles and other vehicles. The rubber composition of the present invention can improve the oil resistance and flex fatigue resistance of vibrationproof rubber and damping materials. As a result, it is possible to manufacture vibrationproof rubber and damping materials that can be used in environments where oil is splashed, which has been difficult with conventional rubber compositions.

### (Electric wire)

An electric wire is a linear member for transmitting electricity or optical signals. Electric wires are made by covering a good conductor such as copper or copper alloy or optical fiber with an insulating coating layer, and a wide variety of electric wires are manufactured depending on their structure and installation location. The rubber composition of the present invention can improve the oil resistance and flex fatigue resistance of electric wires. As a result, it is possible to manufacture electric wires that can be used in environments where oil is splashed, which has been difficult with conventional rubber compositions.

### (Gasket, oil seal, packing)

Gaskets, oil seals, and packings are parts that prevent liquids and gases from leaking and dirt and foreign matter such as rainwater and dust from entering machines and equipment, and specifically, include gaskets used for fixing purpose, and oil seals and packings used in moving parts and movable parts. For gaskets whose sealing parts are fixed with bolts or the like, various materials are used depending on the purpose for soft gaskets such as O-rings and rubber sheets. In addition, packings are used in rotating parts such as the shafts of pumps and motors, movable parts of valves, reciprocating parts such as pistons, coupling parts of couplers, and water stop parts of water faucets, etc. The rubber composition of the present invention can improve the oil resistance of these members. As a result, it is possible to manufacture seals for non-polar fluids such as engine oil and gear oil, which has been difficult with conventional rubber compositions.

### (Diaphragm)

A diaphragm is a membrane that separates fluid, especially a diaphragm that has a deep constriction and is used by folding back its cylindrical portion is called a bellofram. Belloframs and diaphragms are not used alone, but are assembled into equipment to perform their functions, and include those made only of rubber and those obtained by coating rubber on polyester cloth or the like. Specifically, diaphragms are used as pressure reducing valves, pumps, and cylinders. The rubber composition of the present invention can improve the oil resistance and flex fatigue resistance of these diaphragms. As a result, it is possible to manufacture diaphragms used for non-polar fluids such as engine oil and gear oil, which has been difficult with conventional rubber compositions.

### (Sponge)

Sponges are porous substances with countless fine pores inside, and are specifically used in vibrationproof members, sponge seal parts, wetsuits, shoes, or the like. The rubber composition of the present invention can improve the oil resistance and flex fatigue resistance of sponges. In addition, since chloroprene-based rubber is used, it is possible to improve the flame retardancy of sponges. As a result, it is possible to manufacture sponges that are resistant to swelling deformation and discoloration due to oil, and sponges that have excellent flame retardancy, which has been difficult with conventional rubber compositions. Furthermore, the hardness of the resulting sponge can be adjusted appropriately by adjusting the content of the foaming agent.

Examples of methods for molding the rubber composition (unvulcanized state) and vulcanizate according to this embodiment include press molding, extrusion molding, calendar molding, or the like. The temperature at which the rubber composition is vulcanized may be appropriately set according to the composition of the rubber composition, and may be 140 to 220°C, or 160 to 190°C. The vulcanization time for vulcanizing the rubber composition may be appropriately set depending on the composition of the rubber composition, the shape of the unvulcanized molded object, etc., and may be 10 to 60 minutes.

### Example

Hereinafter, the present invention will be explained in more detail based on Examples, but the present invention is not limited thereto.

### <Method for producing chloroprene-based rubber A-2>

In a polymerization vessel with an internal volume of 3 L equipped with a heating and cooling jacket and a stirrer, 24 parts by mass of chloroprene (monomer), 24 parts by mass of acrylonitrile (monomer), 0.5 parts by mass of diethylxanthogen disulfide, 200 parts by mass of pure water, 5.00 parts by mass of potassium rosinate (manufactured by Harima Chemicals Group, Inc.), 0.40 parts by mass of sodium hydroxide, and 2.0 parts by mass of sodium salt of β-naphthalenesulfonic acid formalin condensate (manufactured by Kao Corporation) were added. Next, after adding 0.1 parts by mass of potassium persulfate as a polymerization initiator, emulsion polymerization was carried out at a polymerization temperature of 40°C under a nitrogen flow. The above-mentioned chloroprene was added in batches from 20 seconds after the start of polymerization, and the flow rate of batch addition was adjusted using a solenoid valve based on the change in heat value of the refrigerant during the 10 seconds after the start of polymerization, and the flow rate was readjusted every 10 seconds thereafter to continuously perform. When the polymerization rate with respect to the total amount of chloroprene and acrylonitrile reached 50%, 0.02 parts by mass of phenothiazine was added as a polymerization terminator to terminate the polymerization. Thereafter, unreacted monomers in the reaction solution were removed under reduced pressure to obtain chloroprene-based latex A-2 containing a chloroprene-acrylonitrile copolymer.

The above-mentioned polymerization rate [%] of the chloroprene-based latex was calculated from the dry mass after the chloroprene-based latex is air-dried. Specifically, it was calculated using the following formula (A). In the formula, "solid content concentration" is the concentration of solid content [% by mass] after heating 2 g of sampled chloroprene-based latex at 130°C and removing volatile components such as solvent (water), volatile chemicals, and raw materials. The "total amount charged" is the total amount [g] of raw materials, reagents, and solvent (water) charged into the polymerization vessel from the start of polymerization to a certain time. The "evaporation residue" is the mass [g] of chemicals that remain as a solid content together with the polymer without volatilizing under the condition of 130°C, among the chemicals and raw materials charged up to a certain time from the start of polymerization. The "amount of monomer charged" is the total amount [g] of the monomer initially charged into the polymerization vessel and the amount of monomer added in batches up to a certain time from the start of polymerization. Note that the "monomer" here is the total amount of chloroprene and acrylonitrile. Polymerization rate = {[(total amount charged × solid content concentration / 100) - evaporation residue] / amount of monomer charged} × 100

After adjusting the pH of the above-mentioned chloroprene-based latex A-2 to 7.0 using acetic acid or sodium hydroxide, the chloroprene-based latex was frozen and coagulated on a metal plate cooled to -20°C to break the emulsification, thereby obtaining a sheet. After washing this sheet with water, it was dried at 130°C for 15 minutes to obtain a solid chloroprene-based rubber A-2.

The content of the acrylonitrile monomer unit contained in the chloroprene-based rubber A-2 was calculated from the content of nitrogen atoms in the chloroprene-acrylonitrile copolymer rubber. Specifically, the content of nitrogen atoms in 100 mg of chloroprene-based rubber A-2 was measured using an elemental analyzer (Sumigraph 220F, manufactured by Sumika Chemical Analysis Service, Ltd.), and the content of the acrylonitrile monomer unit was calculated. The content of the acrylonitrile monomer unit was 10.0% by mass.

The above elemental analysis was performed as follows. The electric furnace temperature was set to 900°C for the reaction furnace and 600°C for the reduction furnace, the column temperature was set to 70°C, and the detector temperature was set to 100°C, oxygen was flowed at 0.2 mL/min as a combustion gas and helium was flowed at 80 mL/min as a carrier gas. A calibration curve was created using aspartic acid (10.52%), which has a known nitrogen content, as a reference material.

The content of the acrylonitrile monomer unit in the chloroprene-based rubber A-2 obtained by the above production method was 10.0% by mass.

### <Method for producing chloroprene-based rubber A-1, A-3 to A-5>

By changing the amount of acrylonitrile monomer added in the polymerization step, chloroprene-based rubber A-1 in which the content of acrylonitrile monomer unit contained in the chloroprene-based rubber was 5.0% by mass, chloroprene-based rubber A-3 in which the content of the acrylonitrile monomer unit was 15.0% by mass, chloroprene-based rubber A-4 in which the content of the acrylonitrile monomer unit was 20.0% by mass, and chloroprene-based rubber A-5 in which the content of the acrylonitrile monomer unit was 25.0% by mass were obtained.

### <Preparation of rubber composition>

Rubber compositions of Examples and Comparative Examples were obtained by mixing the components as shown in Tables 1 and 2 and kneading them with an 8-inch open roll.

The components used to obtain the rubber composition are as follows.
Chloroprene-based rubber rubber A: chloroprene-based rubber A-1 to A-5 mentioned above
Chloroprene-based rubber rubber B: mercaptan-modified chloroprene rubber, "S-40V" manufactured by Denka Company Limited
Epichlorohydrin-based rubber:
   - Epichlorohydrin-ethylene oxide-allyl glycidyl ether ternary copolymer (ethylene oxide 56 mol%), "EPICHLOMER CG102" manufactured by Osaka Soda Co., Ltd.
   - Epichlorohydrin-ethylene oxide-allyl glycidyl ether ternary copolymer (ethylene oxide 35 mol%), "HydrinT3102" manufactured by Zeon Corporation
   - Epichlorohydrin-ethylene oxide binary copolymer (ethylene oxide 61 mol%), "EPICHLOMER D" manufactured by Osaka Soda Co., Ltd.
Vulcanizing agent: zinc oxide, "Type 2 zinc oxide" manufactured by Sakai Chemical Industry Co., Ltd.
Magnesium oxide: "Kyowamag (registered trademark) 150" manufactured by Kyowa Chemical Industry Co., Ltd.
Vulcanization accelerator: ethylenethiourea, "Accel 22S" manufactured by Kawaguchi Chemical Industry Co., Ltd.
Vulcanization accelerator: trimethylthiourea, "Nocceler TMU" manufactured by Ouchi Shinko Chemical Industrial Co., Ltd.
Vulcanization accelerator: N-cyclohexylbenzothiazole-2-sulfenamide, "Nocceler CZ" manufactured by Ouchi Shinko Chemical Industrial Co., Ltd.
Filler: Carbon Black (FEF), "Asahi #60U" manufactured by Asahi Carbon Co., Ltd.
Plasticizer: ether ester oil, "ADK CIZER RS-700" manufactured by ADEKA Corporation
Anti-aging agent: 4,4'-bis(α,α-dimethylbenzyl)diphenylamine, "Nocrac (registered trademark) CD" manufactured by Ouchi Shinko Chemical Industrial Co., Ltd.
Anti-aging agent: nickel dibutyldithiocarbamate, "Nocrac (registered trademark) NBC" manufactured by Ouchi Shinko Chemical Industrial Co., Ltd.
Vulcanization accelerator: 2-mercaptobenzimidazole, "Nocrac (registered trademark) MB" manufactured by Ouchi Shinko Chemical Industrial Co., Ltd.
Lubricant and processing aid: stearic acid, "Stearic acid 50S" manufactured by New Japan Chemical Co., Ltd.
Lubricant and processing aid: sorbitan monostearate, Span 60, "Sorbitan Monostearate" manufactured by FUJIFILM Wako Pure Chemical Corporation

### <Preparation of vulcanized molded object>

The obtained rubber composition was press-vulcanized at 170°C for 20 minutes in accordance with JIS K6250 to produce a sheet-like vulcanized molded object having a thickness of 2 mm and a vulcanized molded object for De Mattia bending fatigue test.

### <Evaluation of vulcanized molded object>

The above-mentioned vulcanized molded object was evaluated as follows. The results are shown in Tables 1 and 2.

### (Oil resistance)

A test piece was obtained by punching out a test piece 25 mm in length and 20 mm in width from the above-mentioned sheet-like vulcanized molded object. The obtained test piece was immersed in test oil (high lubricating oil for automobiles, ASTM No. 3, IRM 903 oil) at 130°C for 72 hours. The volume change rate ΔV was calculated in accordance with JIS K 6258. The obtained volume change rate ΔV was evaluated based on the following criteria.
A: less than 20%
B: 20% or more, and less than 30%
C: 30% or more, and less than 40%
D: 40% or more

### (Freeze resistance)

A Gehman torsion test was conducted in accordance with JIS K 6261 to determine T10. The temperature (T10) at which the 180° torsional modulus becomes 10 times the 180° torsional modulus at room temperature was determined for the above-mentioned vulcanized molded object. The obtained T10 was evaluated based on the following criteria.
A: lower than -34°C
B: -34°C or higher, and lower than -30°C
C: -30°C or higher, and lower than -26°C
D: -26°C or higher

### (Flex fatigue resistance)

A De Mattia flex fatigue test was conducted in accordance with JIS K6260. Under the conditions of a stroke of 58 mm and a speed of 300±10 rpm, the number of bending tests (unit: 10,000 times) at the time a crack occurs was measured to evaluate durability and fatigue properties. Measurements were performed up to 2,000,000 times. The number of bending tests at the time a crack occurs was evaluated based on the following evaluation criteria.
A: 1,000,000 times or more
B: 650,000 times or more, and less than 1,000,000 times
C: 300,000 times or more, and less than 650,000 times
D: less than 300,000 times

**[Table 1]**

| Table 1 | | | | Unit | Examples | | | | | | | | | | | | |
|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 |
| | Chloroprene based rubber | Rubber A | Chloroprene-based rubber A-1 (acrylonitrile monomer unit content 5%) | parts by mass | | | | | | | | | 60 | | | | |
| | | | Chloroprene-based rubber A-2 (acrylonitrile monomer unit content 10%) | parts by mass | 80 | 60 | 40 | 20 | 60 | 30 | 60 | 60 | | | | 60 | |
| | | | Chloroprene-based rubber A-3 (acrylonitrile monomer unit content 15%) | parts by mass | | | | | | | | | | 60 | | | |
| | | | Chloroprene-based rubber A-4 (acrylonitrile monomer unit content 20%) | parts by mass | | | | | | | | | | | 60 | | |
| | | Rubber B | Mercaptan-modified chloroprene rubber | parts by mass | | | | | | 30 | | | | | | | 60 |
| | | Content of unsaturated nitrile monomer unit in chloroprene-based rubber | | % by mass | 10 | 10 | 10 | 10 | 10 | 5 | 10 | 10 | 5 | 15 | 20 | 10 | 0 |
| | Epichlorohydrin-based rubber | | epichlorohydrin-ethylene oxide-allyl glycidyl ether ternary copolymer (ethylene oxide 56mol%) | parts by mass | 20 | 40 | 60 | 80 | 40 | 40 | | | 40 | 40 | 40 | 40 | 40 |
| | | | epichlorohydrin-ethylene oxide-allyl glycidyl ether ternary copolymer (ethylene oxide 35mol%) | parts by mass | | | | | | | 40 | | | | | | |
| Compounding | | | epichlorohydrin-ethylene oxide binary copolymer (ethylene oxide 61mol%) | parts by mass | | | | | | | | 40 | | | | | |
| | Vulcanizing agent | | Type 2 zinc oxide | parts by mass | 3 | 3 | 3 | 3 | 3 | 3 | 3 | 3 | 3 | 3 | 3 | 3 | 3 |
| | Magnesium oxide | | Kyowamag 150 | parts by mass | 4 | 4 | 4 | 4 | 4 | 4 | 4 | 4 | 4 | 4 | 4 | 4 | 4 |
| | Vulcanization accelerator | | Accel 225 | parts by mass | 1 | 1 | 1 | 1 | 1 | 1 | 1 | 1 | 1 | 1 | 1 | | 1 |
| | | | NoccelerTMU | parts by mass | | | | | | | | | | | | 1 | |
| | | | Nocceler CZ | parts by mass | 1 | 1 | 1 | 1 | 1 | 1 | 1 | 1 | 1 | 1 | 1 | 1 | 1 |
| | | | Nocrac MB | parts by mass | | | | | 1 | 1 | 1 | 1 | 1 | 1 | 1 | 1 | |
| | Filler | Carbon Black | FEF | parts by mass | 50 | 50 | 50 | 50 | 50 | 50 | 50 | 50 | 50 | 50 | 50 | 50 | 50 |
| | Plasticizer | | RS-700 | parts by mass | 10 | 10 | 10 | 10 | 10 | 10 | 10 | 10 | 10 | 10 | 10 | 10 | 10 |
| | Lubricant/processing aid | | Stearic acid | parts by mass | 1 | 1 | 1 | 1 | 1 | 1 | 1 | 1 | 1 | 1 | 1 | 1 | 1 |
| | | | Sorbitan monostearate | parts by mass | 1 | 1 | 1 | 1 | 1 | 1 | 1 | 1 | 1 | 1 | 1 | 1 | 1 |
| | Anti-aging agent | | Nocrac CD | parts by mass | 2 | 2 | 2 | 2 | 2 | 2 | 2 | 2 | 2 | 2 | 2 | 2 | 2 |
| | | | Nocrac NBC | parts by mass | 1 | 1 | 1 | 1 | 1 | 1 | 1 | 1 | 1 | 1 | 1 | 1 | 1 |
| Evaluation | Oil resistance | | | | B | A | A | A | A | B | A | A | B | A | A | A | C |
| | Freeze resistance | | | | C | B | B | A | B | A | C | B | A | B | C | B | A |
| | Flex fatigue resistance | | | | B | B | C | C | A | A | A | A | A | A | A | A | C |

**[Table 2]**

| Table 2 | | | | Unit | Comparative Examples | | | | | |
|---|---|---|---|---|---|---|---|---|---|---|
| | | | | | 1 | 2 | 3 | 4 | 5 | 6 |
| | Chloroprene-based rubber | Rubber A | Chloroprene-based rubber A-2 (acrylonitrile monomer unit content 10%) | parts by mass | 100 | | | 60 | | |
| | | | Chloroprene-based rubber A-5 (acrylonitrile monomer unit content 25%) | parts by mass | | | | | 60 | |
| | | Rubber B | Mercaptan-modified chloroprene rubber | parts by mass | | | 100 | 40 | | 100 |
| | | Content of unsaturated nitrile monomer unit in chloroprene-based rubber | | % by mass | 10 | 0 | 0 | 6 | 25 | 0 |
| | Epichlorohydrin-based rubber | | epichlorohydrin-ethylene oxide -allyl glycidyl ether ternary copolymer (ethylene oxide 56mol%) | parts by mass | | 100 | | | 40 | |
| | Vulcanizing agent | | Type 2 zinc oxide | parts by mass | 5 | | 5 | 5 | 3 | 5 |
| | Magnesium oxide | | Kyowamag 150 | parts by mass | 4 | 4 | 4 | 4 | 4 | 4 |
| | Vulcanization accelerator | | Accel 225 | parts by mass | 1 | 1 | 1 | 1 | 1 | 1 |
| Compounding | | | Nocceler CZ | parts by mass | 1 | 1 | 1 | 1 | 1 | 1 |
| | | | Nocrac MB | parts by mass | | | | | | 1 |
| | Filler | Carbon Black | FEF | parts by mass | 50 | 50 | 50 | 50 | 50 | 50 |
| | Plasticizer | | RS-700 | parts by mass | 10 | 10 | 10 | 10 | 10 | 10 |
| | Anti-aging agent | | Nocrac CD | parts by mass | 3 | | 3 | 3 | 2 | 3 |
| | | | Nocrac NBC | parts by mass | 1 | 1 | 1 | 1 | 1 | 1 |
| | Lubricant/processing aid | | Stearic acid | parts by mass | 1 | 1 | 1 | 1 | 1 | 1 |
| | | | Sorbitan monostearate | parts by mass | | 3 | | | 1 | |
| Eval uation | Oil resistance | | | | B | A | D | D | A | D |
| | Freeze resistance | | | | D | A | A | D | D | A |
| | Flex fatigue resistance | | | | A | D | B | A | A | A |

## Claims

1. A rubber composition comprising a chloroprene-based rubber and an epichlorohydrin-based rubber, wherein:
the rubber composition comprises 5 to 95 parts by mass of the chloroprene-based rubber and 5 to 95 parts by mass of the epichlorohydrin-based rubber, per 100 parts by mass of rubbers contained in the rubber composition, and
the chloroprene-based rubber has a content of an unsaturated nitrile monomer unit of less than 25% by mass.

2. The rubber composition of Claim 1, wherein:
the unsaturated nitrile monomer is acrylonitrile.

3. The rubber composition of Claim 1 or 2, wherein:
the chloroprene-based rubber comprises a rubber A and a rubber B,
the rubber A is a chloroprene-based rubber having 1 to 20% by mass of an unsaturated nitrile monomer unit, 60 to 99% by mass of a chloroprene monomer unit, and 0 to 20% by mass of monomer units other than the chloroprene monomer and the unsaturated nitrile monomer, and
the rubber B is a chloroprene-based rubber having 80 to 100% by mass of a chloroprene monomer unit and 0 to 20% by mass of monomer units other than the chloroprene monomer and the unsaturated nitrile monomer.

4. The rubber composition of Claim 1 or 2, wherein:
the chloroprene-based rubber comprises 20 to 99% by mass of the rubber A and 1 to 80% by mass of the rubber B, when the chloroprene-based rubber is 100% by mass.

5. The rubber composition of Claim 1 or 2, wherein:
the epichlorohydrin-based rubber comprises 5 to 90 mol% of an ethylene oxide monomer unit.

6. The rubber composition of Claim 1 or 2, wherein:
the epichlorohydrin-based rubber comprises an epichlorohydrin-ethylene oxide-allyl glycidyl ether ternary copolymer or an epichlorohydrin-ethylene oxide binary copolymer.

7. The rubber composition of Claim 1 or 2, wherein:
the rubber composition comprises at least one compound selected from the group consisting of sulfur, trimethylthiourea, ethylenethiourea, diphenylthiourea, diethylthiourea, dibutylthiourea, 1,3-trimethylene-2-thiourea, and 3-methylthiazolidine-2-thione.

8. The rubber composition of Claim 1 or 2, wherein:
the rubber composition comprises at least one compound selected from the group consisting of 2-mercaptobenzimidazole, 2-mercaptomethylbenzimidazole, and zinc salt of 2-mercaptobenzimidazole.

9. A vulcanizate of the rubber composition of Claim 1 or 2.

10. A vulcanized molded object using the vulcanizate of Claim 9.
